# EUROPEAN PATENT SPECIFICATION

(11) **EP 4 154 144 B1**
(45) Date of publication and mention of the grant of the patent: **28.08.2024**
(21) Application number: 21720122.7
(22) Date of filing: 30.03.2021
(51) Int. Cl.: G06F 21/57, H04L 9/40

(54) **CYBER ATTACK COVERAGE**
CYBERANGRIFFSABDECKUNG
COUVERTURE CONTRE LES CYBERATTAQUES

(30) Priority: 22.05.2020 US 202016882367
(43) Date of publication of application: 29.03.2023
(73) Proprietor: Microsoft Technology Licensing, LLC, Redmond, WA 98052-6399 (US)
(72) Inventor: PERGAL, Guy, Redmond, Washington 98052-6399 (US); SALINAS, Israel Rotem, Redmond, Washington 98052-6399 (US); HATEKAR, Abhijeet Surendra, Redmond, Washington 98052-6399 (US); GRADY ASHKENAZY, Itai, Redmond, Washington 98052-6399 (US)
(74) Representative: Grünecker Patent- und Rechtsanwälte PartG mbB
(86) International application number: PCT/US2021/024748
(87) International publication number: WO 2021/236232

(56) References cited:
- US-A1- 2019 109 872
- US-B1- 8 793 360
- US-B2- 9 483 648

## Description

### BACKGROUND

Computer networks are under constant threat from malicious parties seeking unauthorized access to the systems hosted thereon. The tactics used by malicious parties to attack networks and the tactics used by network administrators to defend against attacks are constantly evolving as the tactics are updated. New exploits are added to the arsenal of malicious parties and ineffective exploits are dropped. Implementing countermeasures, however, is often reactive, wherein network administrators must wait to identify the newest exploit before deploying a countermeasure and determining when to stop deploying a countermeasure when the corresponding exploit is no longer used. Correctly anticipating, identifying, and blocking the new exploits is crucial to maintaining security of a network.

It is with respect to these considerations and others that the disclosure made herein is presented.
US 8,793,360 B1 discloses a system for monitoring a denial of service attack upon a target network resource that includes a memory and a processor. The memory stores instructions. The processor executes the instructions in the memory to receive one of a plurality of denial of service attack profiles, each profile identifying the target network resource and to execute a denial of service attack against the target network resource in accordance with the received profile. The processor further executes the instructions in the memory to scan one or more ports of the target network resource to determine an effect of the executed denial of service attack.
US 9,483,648 B2 discloses a mapping engine that may be used to determine an attack model enumerating software attacks, the software attacks being represented by linked attack components, and may be used to determine a software architecture to be tested, the software architecture being represented by linked architectural components in an architecture diagram. The mapping engine may then associate each attack component and each architectural component with at least one attack tag characterizing attack requirements. A global test plan generator may be used to determine an attack test model, including associating attack components with corresponding architectural components, based on associated attack tags, and may thus generate attack test workflows from the attack test model, to thereby test the software architecture.
It is therefore the object of the claimed invention to provide an improved method, computing device and computer-readable medium for verifying a target system against one or more security threats.
This object is solved by the subject matter of the independent claims.
Preferred embodiments are defined by the dependent claims.

### SUMMARY

Malicious users are constantly trying to bypass security solutions to compromise computing resources. Attackers, for example, may attempt to bypass security solutions by creating new variants and implementations of well-known techniques. The threats are constantly increasing, and automation and new measures are needed to identify detection gaps before attackers do. There are a variety of techniques that are available to attackers, and new techniques are being generated. A systematic approach to track new threats and to leverage accumulated knowledge is needed.

Attackers typically differ in two aspects: their targets, and the attack techniques that are used. Relatively few attackers develop entirely new approaches, while the vast majority use well-known techniques with some minor modifications. The present disclosure describes a framework for defending against attackers by building and managing end-to-end attack vectors based on these assumptions so that defenses can be verified against the attack vectors. The framework allows users to specify a particular attack vector based on tags or individual techniques and generate atomic payloads for testing. In some embodiments, variants of each attack vector may be automatically generated based on existing implementations.

Some embodiments describe technologies for fuzzing on known techniques to generate new attack scenarios and identify gaps in threat coverage. Additionally, the described techniques enable the attack vectors to be focused on a particular known adversary by using tags to define and test possible techniques per a region or advanced persistent threat (APT) groups to enable users to build a customized security suite. The techniques can allow networks and data centers to provide improved security, more effectively adhere to operational objectives, and improve operating efficiencies.

In one embodiment, generated attack scenarios may be represented as an atomic binary that are limited to the tested logic without actual risk. Additionally, the attack scenarios may be extendable by applying fuzzing in multiple dimensions to generate a larger set of potential scenarios. Interfaces may be provided to allow users to generate their own attack scenarios without the need for deep knowledge of threat scenarios. By providing a way to quickly and easily generate attack scenarios, security functions may be tested by generating a large number of attack vectors against various products, identifying vulnerabilities, and grouping missed threats into categories. The disclosed techniques may also be used to compare and rank security products by comparing success rates and weaknesses.

The disclosed techniques provide a single framework for creating a set of predefined attack vectors and payloads. The framework provides an orchestrator that can mix and match a variety of techniques to generate vectors. By providing such a mechanism for generating attack vectors and identifying potential threats, loss of data and services may be avoided or mitigated, reducing downtime and impact to end users and providing for improved security and operational efficiency for computing networks and service providers.

This Summary is provided to introduce a selection of concepts in a simplified form that are further described below in the Detailed Description. This Summary is not intended to identify key features or essential features of the claimed subject matter, nor is it intended that this Summary be used to limit the scope of the claimed subject matter. Furthermore, the claimed subject matter is not limited to implementations that solve any or all disadvantages noted in any part of this disclosure.

### DRAWINGS

The Detailed Description is described with reference to the accompanying figures. In the description detailed herein, references are made to the accompanying drawings that form a part hereof, and that show, by way of illustration, specific embodiments or examples. The drawings herein are not drawn to scale. Like numerals represent like elements throughout the several figures.
FIG. 1 is a diagram illustrating an example system implementing an attack vector infrastructure in accordance with the present disclosure;
FIG. 2 is a diagram illustrating an example attack vector infrastructure in accordance with the present disclosure;
FIG. 3 is a diagram illustrating an example process for an attack vector infrastructure in accordance with the present disclosure;
FIG. 4 is a diagram illustrating example tags for an attack vector infrastructure in accordance with the present disclosure;
FIG. 5 is a diagram illustrating an example payload for an attack vector infrastructure in accordance with the present disclosure;
FIG. 6 is a diagram illustrating an example process for building a payload for an attack vector infrastructure in accordance with the present disclosure;
FIG. 7 is a diagram illustrating a data center in accordance with the present disclosure;
FIG. 8 is a flowchart depicting an example procedure for verifying a target system against one or more security threats in accordance with the present disclosure;
FIG. 9 is a flowchart depicting an example procedure for verifying a target system against one or more security threats in accordance with the present disclosure;
FIG. 10 is an example computing device in accordance with the present disclosure.

### DETAILED DESCRIPTION

The present disclosure provides systems and techniques for generating attack vectors that can be increasingly complex without the need for increased resources, infrastructure, and setup time to test the vectors against a target system. The disclosure describes a framework configured to build and manage end-to-end attack vectors that can include generation of the payloads and the victim machine as well as the delivery of the payload (e.g., macro, zip file, email, etc.). A user may specify an attack vector based on tags or individual techniques to generate an atomic payload, as well as automatically generate variants of each attack vector based on existing implementations. The system for managing and generating the attack vectors may be referred to herein as a cyber vector infrastructure, attack vector infrastructure, or vector infrastructure.

The attack vectors may be generated based on high level and user-readable tags or labels that identify one or more properties for generating samples or attack simulations. The labels can be specific APT groups, techniques, or software that can be associated with any program or target to be tested. The vector infrastructure may further provide templates to automatically generate different implementation combinations.

The vector infrastructure may generate a pre-compiled, single execution file with an adjustable execution workflow that can be externally injected using selected delivery methods and other selectable parameters such as which model to run and in which order, for example. The vector infrastructure may further provide a user interface configured to facilitate selection of vector parameters. The user interface may provide a graphical tool for selecting pre-defined inputs and templates for various attack scenarios. By providing a pipeline of tools that facilitate selection of parameters, a user can quickly and easily chain together a number of parameters to generate a specific attack scenario.

The vector infrastructure may implement tags to facilitate selection of parameters. A tag may be a label which can be attached to one or more templates and can map techniques into buckets (e.g., adversary name, attack phase, etc.). To illustrate using an example, a user may select a series of templates to generate an MS Office application file, select a delivery payload, and create a macro dropper. The generated macro dropper can be injected into the Office application. In some embodiments, a template may represent a specified attack vector which can be assigned to a specific adversary or APT group.

The vector infrastructure may include a number of tools that can include one or more programs or scripts. The vector infrastructure may further include libraries to facilitate tools development (e.g., templates, formats). A template can define a chain of payload tools which, after processing by the vector infrastructure, may become a single binary file.

In some embodiments, a template may be described using JavaScript Object Notation (JSON) which can be used by the vector infrastructure to generate the final payload. JSON may be used to specify which tools to be run and which parameters should be tested. For example, a user may specify a Windows 10 operating system environment and an evasive dropper payload. The vector infrastructure may generate an email message as an .eml file that has a compressed zip file that can be used for the simulated attack.

Tags can be divided into two categories. A group tag may be mapped to one or more tags, e.g., specific APT groups, or to check for specific techniques. Tagging enables users to input to the vector infrastructure what is to be tested and to select templates, samples, and scenarios. A functional tag may be mapped to one or more templates. Templates may be represented as a JSON, and can represent an attack vector.

The output of the vector infrastructure can be a single binary that implements the select attack scenario. The output can also comprise multiple binaries when enabling fuzzing features. In some embodiments, the vector infrastructure may implement template fuzzing which uses a given template to generate multiple variants of the attack vector. In one embodiment, this may be achieved by automatically modifying the template at three levels.

The first level may be the tool parameters. The vector infrastructure may automatically change the parameters for a tool (e.g., change buffer size, etc.). For example, the vector infrastructure may change the batch file dropper, the size of the buffer in each iteration, and the like. The second level may be the implementation. Different tools in the vector infrastructure may have the same input and output and differ only in the implementation. Different kinds of input may also be selected, such as a payload with a VBScript file or a different tool with the same input and output.

A template can also be modified at a third level that can include additional layers. For example, new tools may be added to the chain which do not change the overall flow. For instance, a packer input/output that can be defined as EXE->EXE can be added after a tool that generates an independent EXE file.

It should be understood that in some embodiments, additional layers can be added to increase the number of adjustable parameters. For example, various degrees of variability may be implemented for parameters, implementations, and layers, and the degree and type of variations may be adjustable.

To generate the variations in the implemented levels, a random generator may be implemented to determine the specific parameters for each fuzzed payload. For example, for each tag, variants may be randomly generated. In other embodiments, for each set of selected inputs and/or outputs, the adjustable parameters may be selected using a deterministic selection method.

In some embodiments, the vector infrastructure may include an atomic payload builder. The vector infrastructure may be configured to implement native code implementations for the target system. A precompiled binary may be generated for the target system. The generation of binary payloads may include the insertion of dynamic-link libraries (DLLs) that are injected into the binary as well as the workflow that defines how the DLLs should be run, which parameters to include, and in which order.

The framework configured to build the payload may be referred to herein as an atomic payload builder. In some embodiments, the atomic payload builder may include payload functionality modules that are implemented as DLLs. The DLLs may be embedded as resources in the final payload. The execution order and parameters may be embedded using a JSON configuration file contained in the executable. The main logic in the payload may execute the workflow.

For example, if a macro dropper payload is desired, the vector infrastructure may link together at least three tools to generate the payload. The process may begin with a skeleton input binary into which macro dropper code may be inserted. Arguments may be added for a particular target system. For example, for Office, a "Document_Open" parameter may be selected for the autorun function name in the delivery tool. Additionally, the "document" template may be selected for the injectmacro tool. The resulting payload may be an email message "payload.eml."

The described techniques may be used to verify target system defenses against various attack vectors. The described techniques may further be used to detect and identify gaps in threat coverage for the target system.

In some embodiments, a machine learning model may be implemented to generate payloads for testing a target system. In some configurations, the machine learning model may be configured to utilize supervised, unsupervised, or reinforcement learning techniques to generate payloads. For example, the machine learning model may utilize supervised machine learning techniques by training on the collected threat data. In some embodiments, the machine learning model may also, or alternatively, utilize unsupervised machine learning techniques to determine correlations including, but not limited to, a clustering-based model, a forecasting-based model, a smoothing-based model, or another type of unsupervised machine learning model. In some embodiments, the machine learning model may also, or alternately, utilize reinforcement learning techniques to generate results. For example, the model may be trained using the input data and, based on feedback, the model may be rewarded based on its output.

Referring to the appended drawings, in which like numerals represent like elements throughout the several FIGURES, aspects of various technologies for detecting unauthorized certificates will be described. In the following detailed description, references are made to the accompanying drawings that form a part hereof, and which are shown by way of illustration specific configurations or examples.

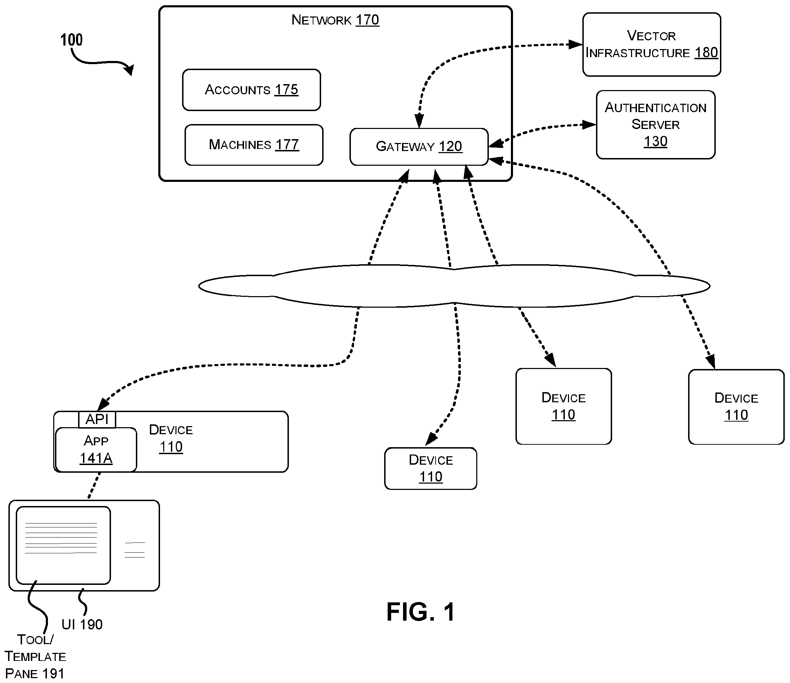

FIG. 1 illustrates an example environment 100 in which attack vector payloads may be generated as described herein. As illustrated, one or more devices 110 may access a network 170 that may include a target function or system. The network 170 may include accounts 175 or physical/virtual machines 177 hosted within the network 170 that may be the subject of an attack. The devices 110 may connect to the network 170 via a gateway 120 which is in communication with the authentication server 130.

The authentication server 130 may be configured to handle the authorization or rejection of login attempts carried in authentication traffic. Although not illustrated, one of skill in the art will appreciate that various servers and intermediaries in a distributed network may be implemented between the devices 110 and the gateway 120 to route a message between the user and the network 170. As will also be appreciated, although some components of the example environment 100 are illustrated singly, in various aspects multiple copies of those components may be deployed, for example, for load balancing purposes, redundancy, or offering multiple services.

In some embodiments, updating or creation of payloads may be enabled within a contextual environment of an application such as a word processing application for creating or editing payloads. In other embodiments, the updating or creation of models may be enabled using a separate user interface application. Either embodiment may be illustrated by application 141 in this example. A user can interact with an application 141 to create and edit payloads, and view and add or edit content. The application 141 may each be configured to display a tool/template pane 191 on a UI 190. The tool/template pane 191 may be used to view available tools, templates, or other parameters for selection and insertion into a payload.

The content provided using the tool/template pane 191 can be used to generate inputs for generating a payload by vector infrastructure 180. In some configurations, the inputs to the vector infrastructure 180 can be in the form of a text strings, files, or any other suitable format. Although vector infrastructure 180 is shown as a separate platform, vector infrastructure 180 may be implemented as a shared platform with other aspects of network 170.

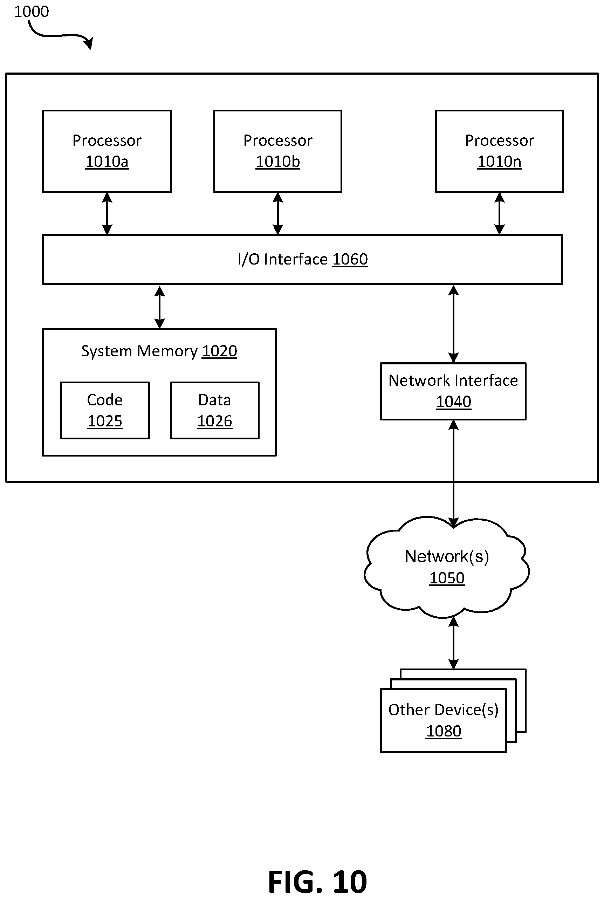

The devices 110 are illustrative of various computing systems including, without limitation, desktop computer systems, wired and wireless computing systems, mobile computing systems (e.g., mobile telephones, netbooks, tablet or slate type computers, notebook computers, and laptop computers), hand-held devices, multiprocessor systems, microprocessor-based or programmable consumer electronics, minicomputers, printers, and mainframe computers. The hardware of these computing systems is discussed in greater detail in regard to FIG. 10.

The devices 110 may be accessed locally and/or by a network, which may include the Internet, a Local Area Network (LAN), a private distributed network for an entity (e.g., a company, a university, a government agency), a wireless ad hoc network, a Virtual Private Network (VPN) or other direct data link (e.g., Bluetooth connection, a direct wired link). For example, a malicious party may attempt to obtain a certificate for accessing restricted resources which may be done without the knowledge or consent of the devices' owners.

The gateway 120 may be a hardware device, such as a network switch, or a software service that links the devices 110 from the external network (e.g., the Internet) to the authentication server 130 over the network 170 (e.g., an intranet). In various aspects, the gateway device 120 may provide a firewall and may regulate the flow of communications traffic into and out of the local network 170. The gateway 120 may be configured to forward messages to the authentication server 130 from the devices 110 (as well as other devices on the internal network).

The authentication server 130 may receive authorization requests from the devices 110 and determine whether to grant access to accounts served by the network 170. The authentication server 130 may be a physical machine or a virtual machine that handles the authentication requests for the network 170 and acts as a domain controller. The authentication server 130 may use various authentication protocols including, but not limited to, PAP (Password Authentication Protocol), CHAP (Challenge-Handshake Authentication Protocol), EAP (Extensible Authentication Protocol), Kerberos, or an AAA (Authentication, Authorization, Accounting) architecture protocol, to allow a user access to one or more systems within a network 170. Depending on the standards used, the number of protected systems in the network 170 and user account settings, the successful presentation of authentication parameters will grant the devices 110 access to one or more systems safeguarded by the authentication server 130 and at an appropriate permissions level for the associated user.

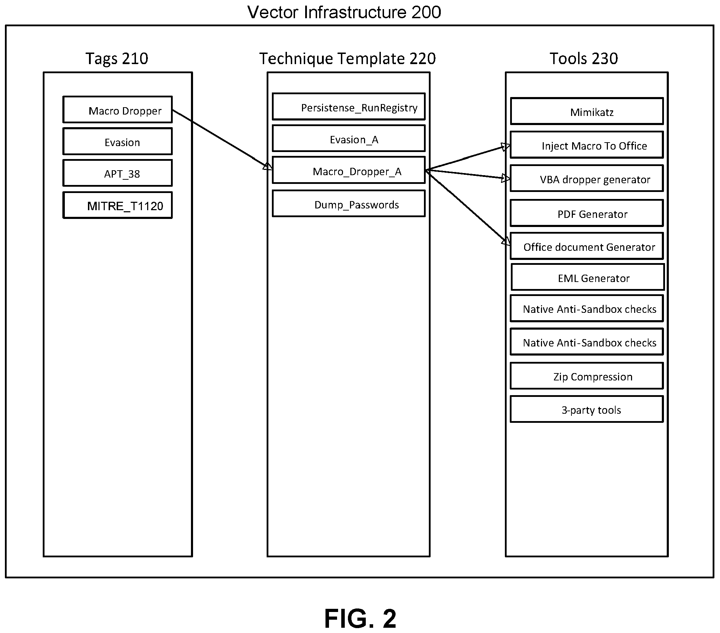

Referring to FIG. 2, illustrated is an example vector infrastructure 200 in accordance with the disclosure. The vector infrastructure 200 may include a pipeline of tools that facilitate selection of parameters to generate an attack vector. The tools may be implemented as programs or scripts with predefined inputs and outputs. The vector infrastructure 200 may include tags 210 to facilitate selection of a threat type. The vector infrastructure 200 may further include a set of technique templates 220 and tools 230 that provide a pipeline of tools that, when chained together, generate a specific attach scenario. The tags 210 may be labels that, when attached to one or more templates, map techniques into buckets (e.g., adversary name, attack phase, etc.).

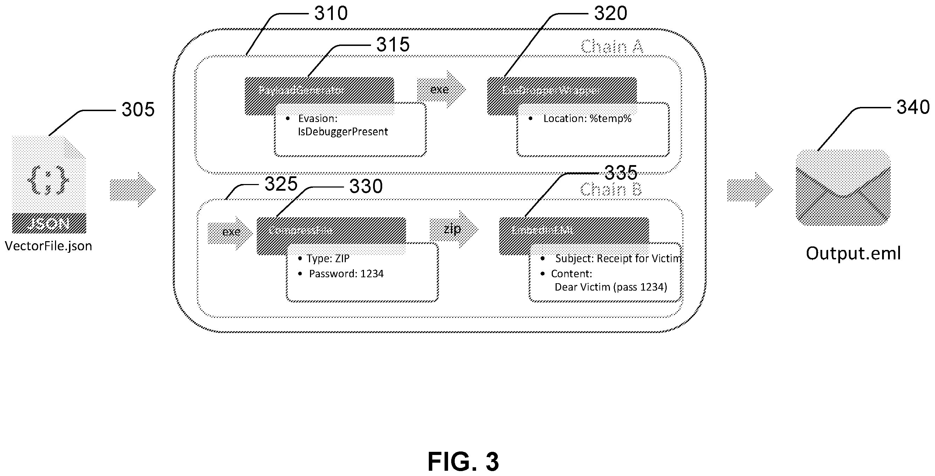

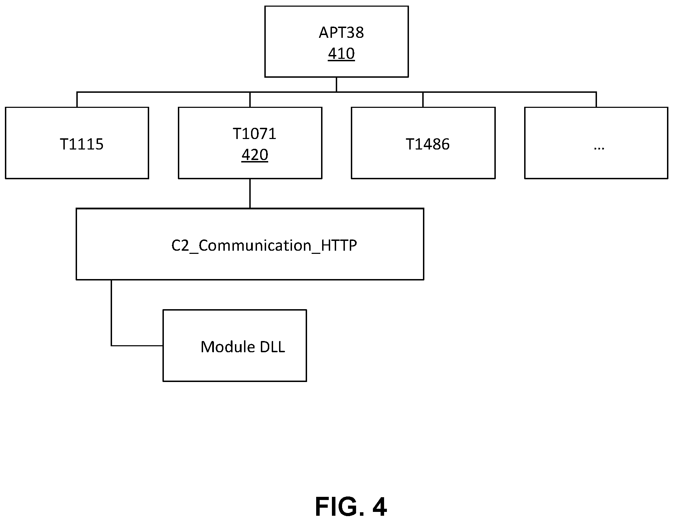

Referring to FIG. 3, illustrated is an example of a template in accordance with the disclosure. A template may be a collection of tools and parameters that, when chained together, implement an attack technique. The template may be described in a JSON file 305 which may be consumed by the framework to generate the final payload. A JSON file 305 may be provided to a process that may be executed in vector infrastructure 200. In one embodiment, a first chain 310 may include a payload generator 315 and an executable dropper wrapper 320. A second chain 325 may include a compress file tool 330 and an EML embedding tool 335. The output of the two chains may be an EML file 340. FIG. 4 further illustrates an example of tags which may include group tags 410 that are mapped to one or more tags and functional tags 420 that are mapped to one or more templates.

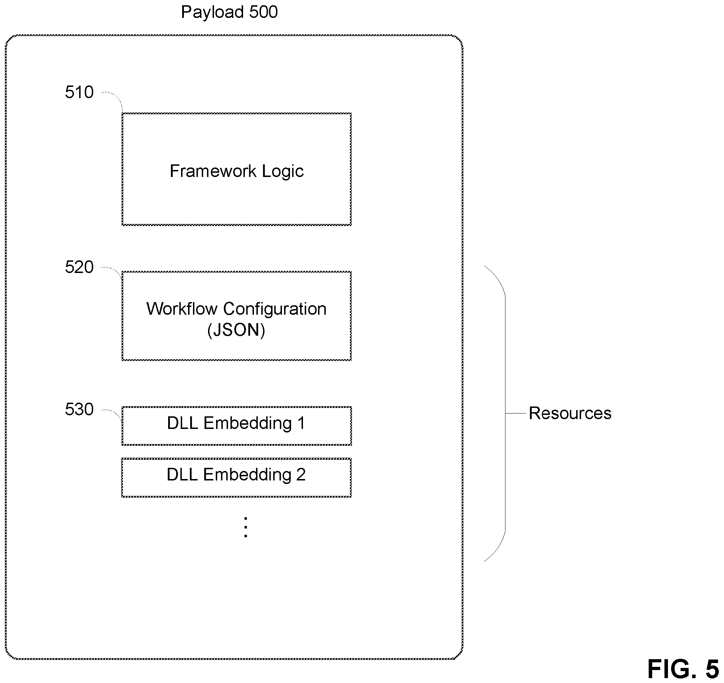

Referring to FIG. 5, illustrated is an example of a payload builder in accordance with the disclosure. In an embodiment, payload functionality modules may be implemented as DLLs. The DLLs 530 may be embedded as resources in the final payload 500. The execution order and parameters may be embedded as a JSON configuration file 520 inside the executable. The framework logic 510 in the payload may execute the workflow. The framework logic 510 may handle the execution of each command and the command chain during the execution on the target system. The payload functionality may be added by embedding DLLs optionally in packed format and editing the workflow configuration to execute the selected functionality.

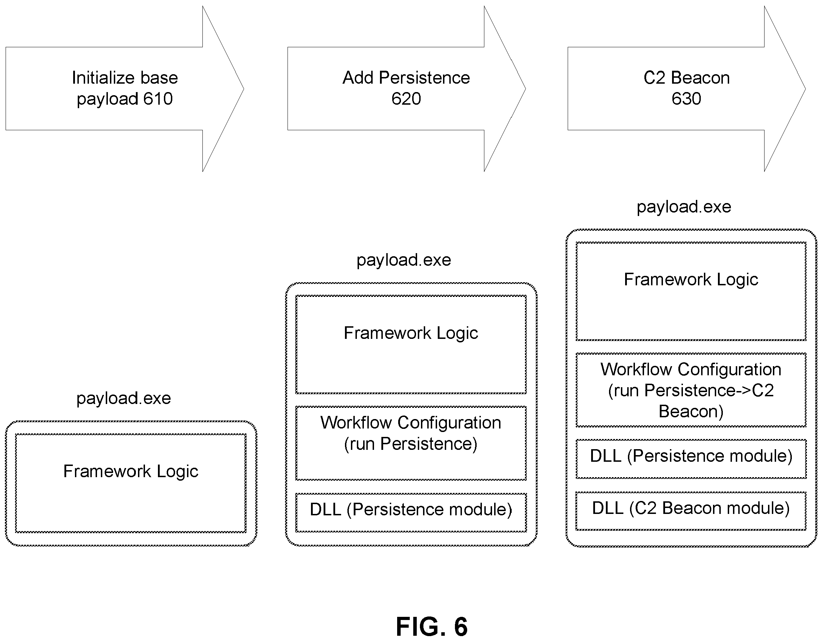

Referring to FIG. 6, illustrated is an example of a payload build process in accordance with the disclosure. In an embodiment, the payload may be built in an incremental manner. An Initialize Base Payload tool 610 may be configured to create a basic payload with no specific threat functionality that includes the main logic and the core DLLs. As each functionality is added 620 the DLL may be an embedded resource in packed form and the JSON may be updated to add the tool to the execution chain. The payload may be built in steps where each step adds/removes/replaces a single DLL/JSON file as embedded content to/from the payload. The payload 630 may be a single self-contained executable that embeds all dependency libraries and files. The logic may be executed when the payload is executed on the target system.

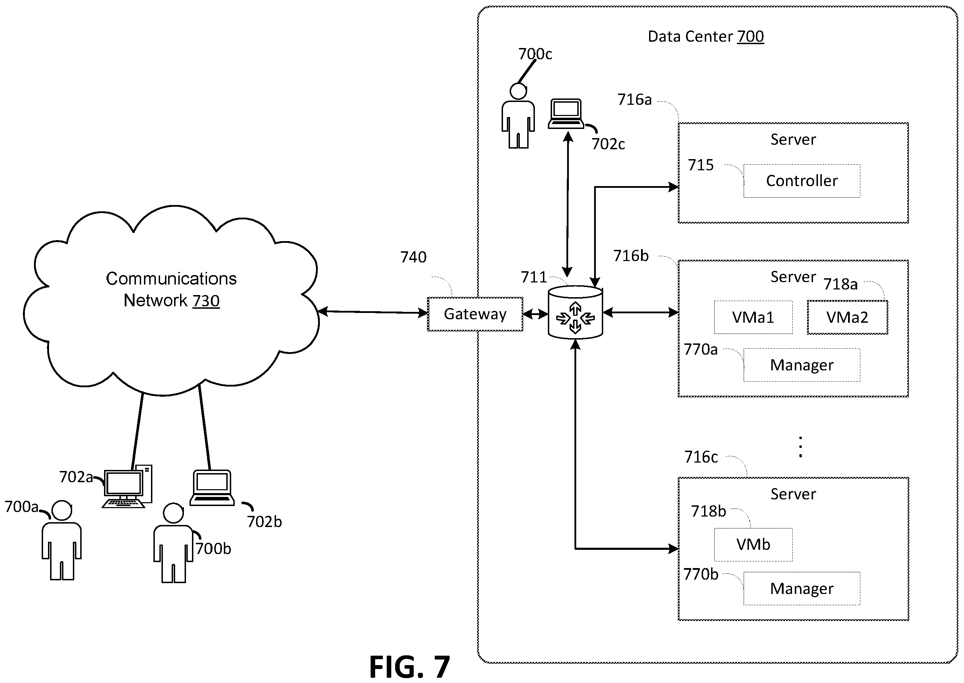

FIG. 7 illustrates an example computing environment in which the embodiments described herein may be implemented. FIG. 7 illustrates a data center 700 that is configured to provide computing resources to users 700a, 700b, or 700c (which may be referred herein singularly as "a user 700" or in the plural as "the users 700") via user computers 702a,702b, and 702c (which may be referred herein singularly as "a computer 702" or in the plural as "the computers 702") via a communications network 730. The computing resources provided by the data center 700 may include various types of resources, such as computing resources, data storage resources, data communication resources, and the like. Each type of computing resource may be general-purpose or may be available in a number of specific configurations. For example, computing resources may be available as virtual machines. The virtual machines may be configured to execute applications, including Web servers, application servers, media servers, database servers, and the like. Data storage resources may include file storage devices, block storage devices, and the like. Each type or configuration of computing resource may be available in different configurations, such as the number of processors, and size of memory and/or storage capacity. The resources may in some embodiments be offered to clients in units referred to as instances, such as virtual machine instances or storage instances. A virtual computing instance may be referred to as a virtual machine and may, for example, comprise one or more servers with a specified computational capacity (which may be specified by indicating the type and number of CPUs, the main memory size and so on) and a specified software stack (e.g., a particular version of an operating system, which may in turn run on top of a hypervisor).

Data center 700 may include servers 716a, 716b, and 716c (which may be referred to herein singularly as "a server 716" or in the plural as "the servers 716") that provide computing resources available as virtual machines 718a and 718b (which may be referred to herein singularly as "a virtual machine 718" or in the plural as "the virtual machines 718"). The virtual machines 718 may be configured to execute applications such as Web servers, application servers, media servers, database servers, and the like. Other resources that may be provided include data storage resources (not shown on FIG. 7) and may include file storage devices, block storage devices, and the like. Servers 716 may also execute functions that manage and control allocation of resources in the data center, such as a controller 715. Controller 715 may be a fabric controller or another type of program configured to manage the allocation of virtual machines on servers 716.

Referring to FIG. 7, communications network 730 may, for example, be a publicly accessible network of linked networks and may be operated by various entities, such as the Internet. In other embodiments, communications network 730 may be a private network, such as a corporate network that is wholly or partially inaccessible to the public.

Communications network 730 may provide access to computers 702. Computers 702 may be computers utilized by users 700. Computer 702a,702b or 702c may be a server, a desktop or laptop personal computer, a tablet computer, a smartphone, a set-top box, or any other computing device capable of accessing data center 700. User computer 702a or 702b may connect directly to the Internet (e.g., via a cable modem). User computer 702c may be internal to the data center 700 and may connect directly to the resources in the data center 700 via internal networks. Although only three user computers 702a,702b, and 702c are depicted, it should be appreciated that there may be multiple user computers.

Computers 702 may also be utilized to configure aspects of the computing resources provided by data center 700. For example, data center 700 may provide a Web interface through which aspects of its operation may be configured through the use of a Web browser application program executing on user computer 702. Alternatively, a stand-alone application program executing on user computer 702 may be used to access an application programming interface (API) exposed by data center 700 for performing the configuration operations.

Servers 716 may be configured to provide the computing resources described above. One or more of the servers 716 may be configured to execute a manager 720a or 720b (which may be referred herein singularly as "a manager 720" or in the plural as "the managers 720") configured to execute the virtual machines. The managers 720 may be a virtual machine monitor (VMM), fabric controller, or another type of program configured to enable the execution of virtual machines 718 on servers 716, for example.

It should be appreciated that although the embodiments disclosed above are discussed in the context of virtual machines, other types of implementations can be utilized with the concepts and technologies disclosed herein.

In the example data center 700 shown in FIG. 7, a network device 711 may be utilized to interconnect the servers 716a and 716b. Network device 711 may comprise one or more switches, routers, or other network devices. Network device 711 may also be connected to gateway 740, which is connected to communications network 730. Network device 711 may facilitate communications within networks in data center 700, for example, by forwarding packets or other data communications as appropriate based on characteristics of such communications (e.g., header information including source and/or destination addresses, protocol identifiers, etc.) and/or the characteristics of the private network (e.g., routes based on network topology, etc.). It will be appreciated that, for the sake of simplicity, various aspects of the computing systems and other devices of this example are illustrated without showing certain conventional details. Additional computing systems and other devices may be interconnected in other embodiments and may be interconnected in different ways.

It should be appreciated that the network topology illustrated in FIG. 7 has been greatly simplified and that many more networks and networking devices may be utilized to interconnect the various computing systems disclosed herein. These network topologies and devices should be apparent to those skilled in the art.

It should also be appreciated that data center 700 described in FIG. 7 is merely illustrative and that other implementations might be utilized. Additionally, it should be appreciated that the functionality disclosed herein might be implemented in software, hardware or a combination of software and hardware. Other implementations should be apparent to those skilled in the art. It should also be appreciated that a server, gateway, or other computing device may comprise any combination of hardware or software that can interact and perform the described types of functionality, including without limitation desktop or other computers, database servers, network storage devices and other network devices, PDAs, tablets, smartphone, Internet appliances, television-based systems (e.g., using set top boxes and/or personal/digital video recorders), and various other consumer products that include appropriate communication capabilities. In addition, the functionality provided by the illustrated modules may in some embodiments be combined in fewer modules or distributed in additional modules. Similarly, in some embodiments the functionality of some of the illustrated modules may not be provided and/or other additional functionality may be available.

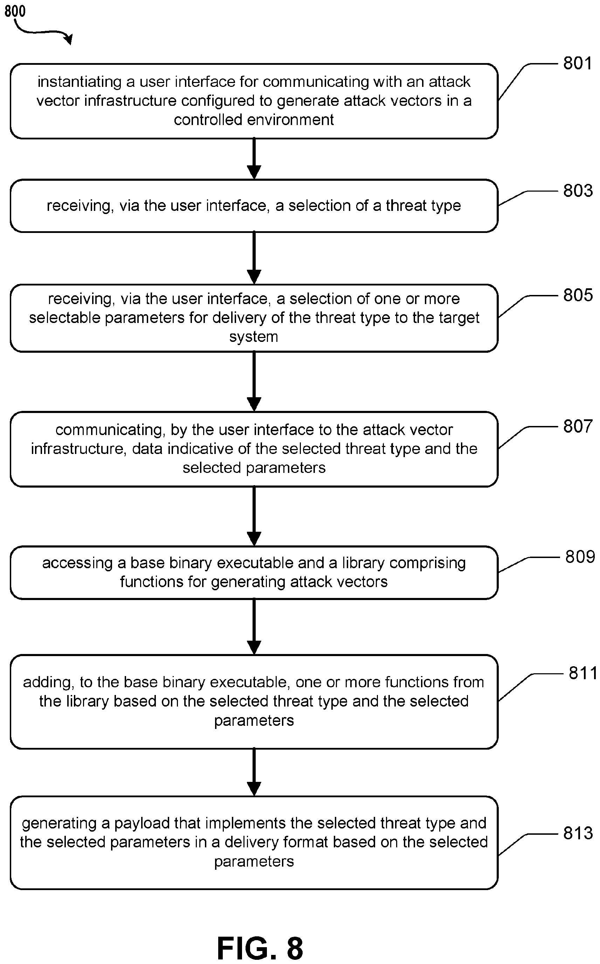

Turning now to FIG. 8, illustrated is an example operational procedure for verifying a target system against one or more security threats in accordance with the present disclosure. The operational procedure may be implemented in a system comprising one or more computing devices.

It should be understood by those of ordinary skill in the art that the operations of the methods disclosed herein are not necessarily presented in any particular order and that performance of some or all of the operations in an alternative order(s) is possible and is contemplated. The operations have been presented in the demonstrated order for ease of description and illustration. Operations may be added, omitted, performed together, and/or performed simultaneously, without departing from the scope of the appended claims.

It should also be understood that the illustrated methods can end at any time and need not be performed in their entireties. Some or all operations of the methods, and/or substantially equivalent operations, can be performed by execution of computer-readable instructions included on a computer-storage media, as defined herein. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like. Although the example routine described below is operating on a computing device, it can be appreciated that this routine can be performed on any computing system which may include a number of computers working in concert to perform the operations disclosed herein.

Thus, it should be appreciated that the logical operations described herein are implemented (1) as a sequence of computer implemented acts or program modules running on a computing system such as those described herein and/or (2) as interconnected machine logic circuits or circuit modules within the computing system. The implementation is a matter of choice dependent on the performance and other requirements of the computing system. Accordingly, the logical operations may be implemented in software, in firmware, in special purpose digital logic, and any combination thereof.

Referring to FIG. 8, operation 801 illustrates instantiating a user interface for communicating with an attack vector infrastructure configured to generate attack vectors in a controlled environment.

Operation 801 may be followed by operation 803. Operation 803 illustrates receiving, via the user interface, a selection of a threat type.

Operation 803 may be followed by operation 805. Operation 805 illustrates receiving, via the user interface, a selection of one or more selectable parameters for delivery of the threat type to the target system.

Operation 805 may be followed by operation 807. Operation 807 illustrates communicating, by the user interface to the attack vector infrastructure, data indicative of the selected threat type and the selected parameters.

Operation 807 may be followed by operation 809. Operation 809 illustrates, in response to receiving the data, accessing a base binary executable and a library comprising functions for generating attack vectors.

Operation 809 may be followed by operation 811. Operation 811 illustrates adding, to the base binary executable, one or more functions from the library based on the selected threat type and the selected parameters.

Operation 811 may be followed by operation 813. Operation 813 illustrates generating a payload that implements the selected threat type and the selected parameters in a delivery format based on the selected parameters.

In an embodiment, the selected threat type and the selected parameters are defined using JavaScript Object Notation (JSON).

In an embodiment, wherein the selectable parameters comprise templates defining predetermined attack scenarios.

In an embodiment, the method further comprises generating fuzzed payloads that are variants of the generated payload.

In an embodiment, the fuzzed payloads are generated by randomly varying the selectable parameters.

In an embodiment, the fuzzed payloads are generated by deterministically varying the selectable parameters.

In an embodiment, the fuzzed payloads are generated based on machine learning.

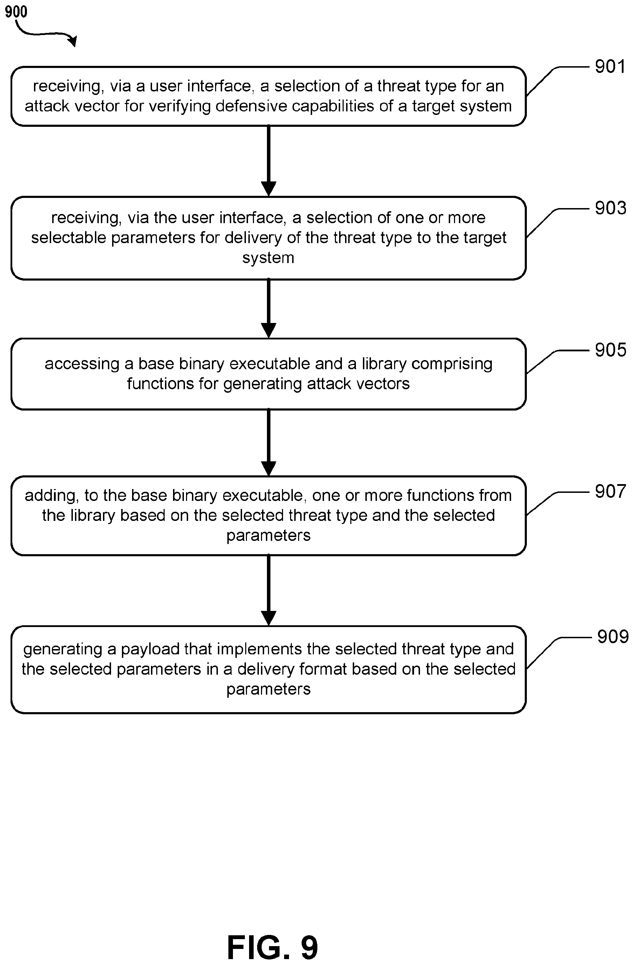

Turning now to FIG. 9, illustrated is an example operational procedure for verifying a target system against one or more security threats in accordance with the present disclosure. The operational procedure may be implemented in a system comprising one or more computing devices. Referring to FIG. 9, operation 901 illustrates receiving, via a user interface, a selection of a threat type for an attack vector for verifying defensive capabilities of a target system.

Operation 901 may be followed by operation 903. Operation 903 illustrates receiving, via the user interface, a selection of one or more selectable parameters for delivery of the threat type to the target system.

Operation 903 may be followed by operation 905. Operation 905 illustrates in response to selection of the threat type and the selected parameters, accessing a base binary executable and a library comprising functions for generating attack vectors.

Operation 905 may be followed by operation 907. Operation 907 illustrates adding, to the base binary executable, one or more functions from the library based on the selected threat type and the selected parameters.

Operation 907 may be followed by operation 909. Operation 909 illustrates generating a payload that implements the selected threat type and the selected parameters in a delivery format based on the selected parameters.

In an embodiment, the user interface is a graphical user interface comprising an interactive area configured to enable selection of the selectable parameters.

In an embodiment, the selectable parameters comprise tags or labels that identify one or more properties for generating samples or attack simulations.

In an embodiment, the delivery format comprises one or more of a macro, zip file, or email.

In an embodiment, the selectable parameters comprise templates defining predetermined attack scenarios.

In an embodiment, the acts comprise generating fuzzed payloads that are variants of the generated payload.

In an embodiment, the fuzzed payloads are generated by randomly varying the selectable parameters.

In an embodiment, the fuzzed payloads are generated by deterministically varying the selectable parameters.

In an embodiment, the fuzzed payloads are generated based on machine learning.

The various aspects of the disclosure are described herein with regard to certain examples and embodiments, which are intended to illustrate but not to limit the disclosure. It should be appreciated that the subject matter presented herein may be implemented as a computer process, a computer-controlled apparatus, or a computing system or an article of manufacture, such as a computer-readable storage medium. While the subject matter described herein is presented in the general context of program modules that execute on one or more computing devices, those skilled in the art will recognize that other implementations may be performed in combination with other types of program modules. Generally, program modules include routines, programs, components, data structures and other types of structures that perform particular tasks or implement particular abstract data types.

Those skilled in the art will also appreciate that the subject matter described herein may be practiced on or in conjunction with other computer system configurations beyond those described herein, including multiprocessor systems. The embodiments described herein may also be practiced in distributed computing environments, where tasks are performed by remote processing devices that are linked through a communications network. In a distributed computing environment, program modules may be located in both local and remote memory storage devices.

Networks established by or on behalf of a user to provide one or more services (such as various types of cloud-based computing or storage) accessible via the Internet and/or other networks to a distributed set of clients may be referred to as a service provider. Such a network may include one or more data centers such as data center 300 illustrated in FIG. 3, which are configured to host physical and/or virtualized computer servers, storage devices, networking equipment and the like, that may be used to implement and distribute the infrastructure and services offered by the service provider.

In some embodiments, a computing device that implements a portion or all of one or more of the technologies described herein, including the techniques to verify a target system against one or more security threats may include a general-purpose computer system that includes or is configured to access one or more computer-accessible media. FIG. 10 illustrates such a general-purpose computing device 1000. In the illustrated embodiment, computing device 1000 includes one or more processors 1010a, 1010b, and/or 1010n (which may be referred herein singularly as "a processor 1010" or in the plural as "the processors 1010") coupled to a system memory 1020 via an input/output (I/O) interface 1030. Computing device 1000 further includes a network interface 1040 coupled to I/O interface 1030.

In various embodiments, computing device 1000 may be a uniprocessor system including one processor 1010 or a multiprocessor system including several processors 1010 (e.g., two, four, eight, or another suitable number). Processors 1010 may be any suitable processors capable of executing instructions. For example, in various embodiments, processors 1010 may be general-purpose or embedded processors implementing any of a variety of instruction set architectures (ISAs), such as the x1010, PowerPC, SPARC, or MIPS ISAs, or any other suitable ISA. In multiprocessor systems, each of processors 1010 may commonly, but not necessarily, implement the same ISA.

System memory 1020 may be configured to store instructions and data accessible by processor(s) 1010. In various embodiments, system memory 1020 may be implemented using any suitable memory technology, such as static random access memory (SRAM), synchronous dynamic RAM (SDRAM), nonvolatile/Flash-type memory, or any other type of memory. In the illustrated embodiment, program instructions and data implementing one or more desired functions, such as those methods, techniques and data described above, are shown stored within system memory 1020 as code 1025 and data 1026.

In one embodiment, I/O interface 1030 may be configured to coordinate I/O traffic between the processor 1010, system memory 1020, and any peripheral devices in the device, including network interface 1040 or other peripheral interfaces. In some embodiments, I/O interface 1030 may perform any necessary protocol, timing, or other data transformations to convert data signals from one component (e.g., system memory 1020) into a format suitable for use by another component (e.g., processor 1010). In some embodiments, I/O interface 1030 may include support for devices attached through various types of peripheral buses, such as a variant of the Peripheral Component Interconnect (PCI) bus standard or the Universal Serial Bus (USB) standard, for example. In some embodiments, the function of I/O interface 1030 may be split into two or more separate components. Also, in some embodiments some or all of the functionality of I/O interface 1030, such as an interface to system memory 1020, may be incorporated directly into processor 1010.

Network interface 1040 may be configured to allow data to be exchanged between computing device 1000 and other device or devices 1080 attached to a network or network(s)1050, such as other computer systems or devices as illustrated in FIGS. 1 through 4, for example. In various embodiments, network interface 1040 may support communication via any suitable wired or wireless general data networks, such as types of Ethernet networks, for example. Additionally, network interface 1040 may support communication via telecommunications/telephony networks such as analog voice networks or digital fiber communications networks, via storage area networks such as Fibre Channel SANs or via any other suitable type of network and/or protocol.

In some embodiments, system memory 1020 may be one embodiment of a computer-accessible medium configured to store program instructions and data as described above for FIGS. 1-9 for implementing embodiments of the corresponding methods and systems. However, in other embodiments, program instructions and/or data may be received, sent or stored upon different types of computer-accessible media. A computer-accessible medium may include non-transitory storage media or memory media, such as magnetic or optical media, e.g., disk or DVD/CD coupled to computing device 1000 via I/O interface 1030. A non-transitory computer-accessible storage medium may also include any volatile or non-volatile media, such as RAM (e.g. SDRAM, DDR SDRAM, RDRAM, SRAM, etc.), ROM, etc., that may be included in some embodiments of computing device 1000 as system memory 1020 or another type of memory. Further, a computer-accessible medium may include transmission media or signals such as electrical, electromagnetic or digital signals, conveyed via a communication medium such as a network and/or a wireless link, such as may be implemented via network interface 1040. Portions or all of multiple computing devices, such as those illustrated in FIG. 10, may be used to implement the described functionality in various embodiments; for example, software components running on a variety of different devices and servers may collaborate to provide the functionality. In some embodiments, portions of the described functionality may be implemented using storage devices, network devices, or special-purpose computer systems, in addition to or instead of being implemented using general-purpose computer systems. The term "computing device," as used herein, refers to at least all these types of devices and is not limited to these types of devices.

Various storage devices and their associated computer-readable media provide non-volatile storage for the computing devices described herein. Computer-readable media as discussed herein may refer to a mass storage device, such as a solid-state drive, a hard disk or CD-ROM drive. However, it should be appreciated by those skilled in the art that computer-readable media can be any available computer storage media that can be accessed by a computing device.

By way of example, and not limitation, computer storage media may include volatile and non-volatile, removable and non-removable media implemented in any method or technology for storage of information such as computer-readable instructions, data structures, program modules or other data. For example, computer media includes, but is not limited to, RAM, ROM, EPROM, EEPROM, flash memory or other solid state memory technology, CD-ROM, digital versatile disks ("DVD"), HD-DVD, BLU-RAY, or other optical storage, magnetic cassettes, magnetic tape, magnetic disk storage or other magnetic storage devices, or any other medium which can be used to store the desired information and which can be accessed by the computing devices discussed herein. For purposes of the claims, the phrase "computer storage medium," "computer-readable storage medium" and variations thereof, does not include waves, signals, and/or other transitory and/or intangible communication media, per se.

Encoding the software modules presented herein also may transform the physical structure of the computer-readable media presented herein. The specific transformation of physical structure may depend on various factors, in different implementations of this description. Examples of such factors may include, but are not limited to, the technology used to implement the computer-readable media, whether the computer-readable media is characterized as primary or secondary storage, and the like. For example, if the computer-readable media is implemented as semiconductor-based memory, the software disclosed herein may be encoded on the computer-readable media by transforming the physical state of the semiconductor memory. For example, the software may transform the state of transistors, capacitors, or other discrete circuit elements constituting the semiconductor memory. The software also may transform the physical state of such components in order to store data thereupon.

As another example, the computer-readable media disclosed herein may be implemented using magnetic or optical technology. In such implementations, the software presented herein may transform the physical state of magnetic or optical media, when the software is encoded therein. These transformations may include altering the magnetic characteristics of particular locations within given magnetic media. These transformations also may include altering the physical features or characteristics of particular locations within given optical media, to change the optical characteristics of those locations. Other transformations of physical media are possible without departing from the scope of the present description, with the foregoing examples provided only to facilitate this discussion.

In light of the above, it should be appreciated that many types of physical transformations take place in the disclosed computing devices in order to store and execute the software components and/or functionality presented herein. It is also contemplated that the disclosed computing devices may not include all of the illustrated components shown in FIG. 10, may include other components that are not explicitly shown in FIG. 10, or may utilize an architecture completely different than that shown in FIG. 10.

Although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without author input or prompting, whether these features, elements, and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

While certain example embodiments have been described, these embodiments have been presented by way of example only, and are not intended to limit the scope of the inventions disclosed herein. Thus, nothing in the foregoing description is intended to imply that any particular feature, characteristic, step, module, or block is necessary or indispensable. Indeed, the novel methods and systems described herein may be embodied in a variety of other forms; furthermore, various omissions, substitutions and changes in the form of the methods and systems described herein may be made. The accompanying claims and their equivalents are intended to cover such forms or modifications as would fall within the scope of certain of the inventions disclosed herein.

It should be appreciated any reference to "first," "second," etc. items and/or abstract concepts within the description is not intended to and should not be construed to necessarily correspond to any reference of "first," "second," etc. elements of the claims. In particular, within this Summary and/or the following Detailed Description, items and/or abstract concepts such as, for example, individual computing devices and/or operational states of the computing cluster may be distinguished by numerical designations without such designations corresponding to the claims or even other paragraphs of the Summary and/or Detailed Description. For example, any designation of a "first operational state" and "second operational state" of the computing cluster within a paragraph of this disclosure is used solely to distinguish two different operational states of the computing cluster within that specific paragraph - not any other paragraph and particularly not the claims.

In closing, although the various techniques have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A method for verifying a target system against one or more security threats, the method comprising:
instantiating (801) a user interface for communicating with an attack vector infrastructure configured to generate attack vectors in a controlled environment;
receiving (803), via the user interface, a selection of a threat type;
receiving (805), via the user interface, a selection of one or more selectable parameters for delivery of the threat type to the target system;
communicating (807), by the user interface to the attack vector infrastructure, data indicative of the selected threat type and the selected parameters;
in response to receiving the data:
accessing (809) a base binary executable and a library comprising functions for generating attack vectors;
adding (811), to the base binary executable, one or more functions from the library based on the selected threat type and the selected parameters;
generating (813) a payload that implements the selected threat type and the
selected parameters in a delivery format based on the selected parameters;
**characterized in: that** the generated payload is a single self-contained executable; and
generating fuzzed payloads that are variants of the generated payload, wherein the fuzzed payloads are generated by one or more of randomly varying the selectable parameters, deterministically varying the selectable parameters, or based on machine learning.

2. The method of claim 1, wherein the selected threat type and the selected parameters are defined using JavaScript Object Notation, JSON.

3. The method of claim 1, wherein the selectable parameters comprise templates defining predetermined attack scenarios.

4. A computing device configured to detect unauthorized use of user credentials in a network implementing an authentication protocol, the computing device comprising:
a processor;
a storage device coupled to the processor;
an application stored in the storage device, wherein execution of the application by the processor configures the computing device to perform acts comprising:
receiving (901), via a user interface, a selection of a threat type for an attack vector for verifying defensive capabilities of a target system;
receiving (903), via the user interface, a selection of one or more selectable parameters for delivery of the threat type to the target system;
in response to selection of the threat type and the selected parameters:
accessing (905) a base binary executable and a library comprising functions for generating attack vectors;
adding (907), to the base binary executable, one or more functions from the library based on the selected threat type and the selected parameters; and
generating (909) a payload that implements the selected threat type and the
selected parameters in a delivery format based on the selected parameters;
**characterized in: that** the generated payload is a single self-contained executable; and
generating fuzzed payloads that are variants of the generated payload, wherein the fuzzed payloads are generated by one or more of randomly varying the selectable parameters, deterministically varying the selectable parameters, or based on machine learning.

5. The computing device of claim 4, wherein the user interface is a graphical user interface comprising an interactive area configured to enable selection of the selectable parameters.

6. The computing device of claim 4, wherein the selectable parameters comprise tags or labels that identify one or more properties for generating samples or attack simulations.

7. The computing device of claim 4, wherein the delivery format comprises one or more of a macro, zip file, or email.

8. The computing device of claim 4, wherein the selectable parameters comprise templates defining predetermined attack scenarios.

9. A computer-readable medium having stored thereon a plurality of sequences of instructions which, when executed by a processor, cause the processor to perform a method comprising:
receiving (901), via a user interface, a selection of a threat type for an attack vector for verifying defensive capabilities of a target system;
receiving (903), via the user interface, a selection of one or more selectable parameters for delivery of the threat type to the target system;
in response to selection of the threat type and the selected parameters:
accessing (905) a base binary executable and a library comprising functions for generating attack vectors;
adding (907), to the base binary executable, one or more functions from the library based on the selected threat type and the selected parameters; and
generating (909) a payload that implements the selected threat type and the
selected parameters in a delivery format based on the selected parameters;
**characterised in: that** the generated payload is a single self-contained executable; and
generating payloads that are variants of the generated payload, wherein the fuzzed payloads are generated by one or more of randomly varying the selectable parameters, deterministically varying the selectable parameters, or based on machine learning.

## Patentansprüche

1. Verfahren zum Überprüfen eines Zielsystems hinsichtlich einer oder mehrerer Sicherheitsbedrohungen, wobei das Verfahren umfasst:
Instanziieren (801) einer Benutzerschnittstelle zum Kommunizieren mit einer Angriffsvektor-Infrastruktur, die zum Erzeugen von Angriffsvektoren in einer kontrollierten Umgebung konfiguriert ist;
Empfangen (803), über die Benutzerschnittstelle, einer Auswahl eines Bedrohungstyps;
Empfangen (805), über die Benutzerschnittstelle, einer Auswahl aus einem oder mehreren auswählbaren Parametern zur Bereitstellung des Bedrohungstyps an das Zielsystem;
Übermitteln (807), durch die Benutzerschnittstelle, von Daten, die den ausgewählten Bedrohungstyp und die ausgewählten Parameter angeben, an die Angriffsvektor-Infrastruktur;
als Reaktion auf das Empfangen der Daten:
Zugreifen (809) auf eine ausführbare Basis-Binärdatei und eine Bibliothek, die Funktionen zum Erzeugen von Angriffsvektoren umfasst;
Hinzufügen (811), zu der ausführbaren Basis-Binärdatei, einer oder mehrerer Funktionen aus der Bibliothek basierend auf dem ausgewählten Bedrohungstyp und den ausgewählten Parametern;
Erzeugen (813) einer Nutzlast, die den ausgewählten Bedrohungstyp und die ausgewählten Parameter in einem Bereitstellungsformat basierend auf den ausgewählten Parametern implementiert;
**dadurch gekennzeichnet, dass** die erzeugte Nutzlast eine einzelne in sich geschlossene ausführbare Datei ist; und
Erzeugen von Fuzzed-Nutzlasten, die Varianten der erzeugten Nutzlast sind, wobei die Fuzzed-Nutzlasten durch eines oder mehrere aus zufälligem Variieren der auswählbaren Parameter, deterministischem Variieren der auswählbaren Parameter oder basierend auf maschinellem Lernen erzeugt werden.

2. Verfahren nach Anspruch 1, wobei der ausgewählte Bedrohungstyp und die ausgewählten Parameter mithilfe der JavaScript Object Notation, JSON, definiert werden.

3. Verfahren nach Anspruch 1, wobei die auswählbaren Parameter Vorlagen umfassen, die vorgegebene Angriffsszenarien definieren.

4. Datenverarbeitungsvorrichtung, die konfiguriert ist, um eine unbefugte Verwendung von Benutzeranmeldeinformationen in einem Netzwerk zu erkennen, das ein Authentifizierungsprotokoll implementiert, wobei die Datenverarbeitungsvorrichtung umfasst:
einen Prozessor;
eine mit dem Prozessor verbundene Speichervorrichtung;
eine in der Speichervorrichtung gespeicherte Anwendung, wobei die Ausführung der Anwendung durch den Prozessor die Datenverarbeitungsvorrichtung konfiguriert, um Aktionen durchzuführen, die umfassen:
Empfangen (901), über eine Benutzerschnittstelle, einer Auswahl eines Bedrohungstyps für einen Angriffsvektor zum Überprüfen der Verteidigungsfähigkeiten eines Zielsystems;
Empfangen (903), über die Benutzerschnittstelle, einer Auswahl aus einem oder mehreren auswählbaren Parametern zur Bereitstellung des Bedrohungstyps an das Zielsystem;
als Reaktion auf die Auswahl des Bedrohungstyps und der ausgewählten Parameter:
Zugreifen (905) auf eine ausführbare Basis-Binärdatei und eine Bibliothek, die Funktionen zum Erzeugen von Angriffsvektoren umfasst;
Hinzufügen (907), zu der ausführbaren Basis-Binärdatei, einer oder mehrerer Funktionen aus der Bibliothek basierend auf dem ausgewählten Bedrohungstyp und den ausgewählten Parametern; und
Erzeugen (909) einer Nutzlast, die den ausgewählten Bedrohungstyp und die ausgewählten Parameter in einem Bereitstellungsformat basierend auf den ausgewählten Parametern implementiert;
**dadurch gekennzeichnet, dass** die erzeugte Nutzlast eine einzelne in sich geschlossene ausführbare Datei ist; und
Erzeugen von Fuzzed-Nutzlasten, die Varianten der erzeugten Nutzlast sind, wobei die Fuzzed-Nutzlasten durch eines oder mehrere aus zufälligem Variieren der auswählbaren Parameter, deterministischem Variieren der auswählbaren Parameter oder basierend auf maschinellem Lernen erzeugt werden.

5. Datenverarbeitungsvorrichtung nach Anspruch 4,
wobei die Benutzerschnittstelle eine grafische Benutzerschnittstelle ist, die einen interaktiven Bereich umfasst, der konfiguriert ist, um die Auswahl der auswählbaren Parameter zu ermöglichen.

6. Datenverarbeitungsvorrichtung nach Anspruch 4,
wobei die auswählbaren Parameter Kennzeichnungen oder Beschriftungen umfassen, die eine oder mehrere Eigenschaften zum Erzeugen von Beispielen oder Angriffssimulationen kennzeichnen.

7. Datenverarbeitungsvorrichtung nach Anspruch 4,
wobei das Bereitstellungsformat eines oder mehrere aus einem Makro, einer ZIP-Datei oder einer E-Mail umfasst.

8. Datenverarbeitungsvorrichtung nach Anspruch 4,
wobei die auswählbaren Parameter Vorlagen umfassen, die vorgegebene Angriffsszenarien definieren.

9. Computerlesbares Medium, das eine Vielzahl von darauf gespeicherten Anweisungsfolgen aufweist, die, wenn sie durch einen Prozessor ausgeführt werden, den Prozessor veranlassen, ein Verfahren durchzuführen, das umfasst:
Empfangen (901), über eine Benutzerschnittstelle, einer Auswahl eines Bedrohungstyps für einen Angriffsvektor zum Überprüfen der Verteidigungsfähigkeiten eines Zielsystems;
Empfangen (903), über die Benutzerschnittstelle, einer Auswahl aus einem oder mehreren auswählbaren Parametern zur Bereitstellung des Bedrohungstyps an das Zielsystem;
als Reaktion auf die Auswahl des Bedrohungstyps und der ausgewählten Parameter:
Zugreifen (905) auf eine ausführbare Basis-Binärdatei und eine Bibliothek, die Funktionen zum Erzeugen von Angriffsvektoren umfasst;
Hinzufügen (907), zu der ausführbaren Basis-Binärdatei, einer oder mehrerer Funktionen aus der Bibliothek basierend auf dem ausgewählten Bedrohungstyp und den ausgewählten Parametern; und
Erzeugen (909) einer Nutzlast, die den ausgewählten Bedrohungstyp und die ausgewählten Parameter in einem Bereitstellungsformat basierend auf den ausgewählten Parametern implementiert;
**dadurch gekennzeichnet, dass** die erzeugte Nutzlast eine einzelne in sich geschlossene ausführbare Datei ist; und
Erzeugen von Fuzzed-Nutzlasten, die Varianten der erzeugten Nutzlast sind, wobei die Fuzzed-Nutzlasten durch eines oder mehrere aus zufälligem Variieren der auswählbaren Parameter, deterministischem Variieren der auswählbaren Parameter oder basierend auf maschinellem Lernen erzeugt werden.

## Revendications

1. Procédé pour vérifier un système cible contre une ou plusieurs menaces de sécurité, le procédé comprenant :
l'instanciation (801) d'une interface utilisateur pour communiquer avec une infrastructure de vecteurs d'attaque configurée pour générer des vecteurs d'attaque dans un environnement contrôlé ;
la réception (803), via l'interface utilisateur, d'une sélection d'un type de menace ;
la réception (805), via l'interface utilisateur, d'une sélection d'un ou plusieurs paramètres sélectionnables pour la délivrance du type de menace au système cible ;
la communication (807), par l'interface utilisateur à l'infrastructure de vecteurs d'attaque, de données indicatives du type de menace sélectionné et des paramètres sélectionnés ;
en réponse à la réception des données :
l'accès (809) à un exécutable binaire de base et à une bibliothèque comprenant des fonctions pour générer des vecteurs d'attaque ;
l'ajout (811), à l'exécutable binaire de base, d'une ou de plusieurs fonctions de la bibliothèque sur la base du type de menace sélectionné et des paramètres sélectionnés ;
la génération (813) d'une charge utile qui implémente le type de menace sélectionné et les paramètres sélectionnés dans un format de délivrance basé sur les paramètres sélectionnés ;
**caractérisé en ce que** : la charge utile générée est un seul exécutable autonome ; et
la génération de charges utiles fuzzées qui sont des variantes de la charge utile générée, les charges utiles fuzzées étant générées par une ou plusieurs variations aléatoires des paramètres sélectionnables, par variation déterministe des paramètres sélectionnables, ou sur la base d'un apprentissage automatique.

2. Procédé selon la revendication 1, dans lequel le type de menace sélectionné et les paramètres sélectionnés sont définis en utilisant la notation d'objet JavaScript, JSON.

3. Procédé selon la revendication 1, dans lequel les paramètres sélectionnables comprennent des modèles définissant des scénarios d'attaque prédéterminés.

4. Dispositif informatique configuré pour détecter une utilisation non autorisée d'informations d'identification d'utilisateur dans un réseau mettant en oeuvre un protocole d'authentification, le dispositif informatique comprenant :
un processeur;
un dispositif de stockage couplé au processeur ;
une application stockée dans le dispositif de stockage, l'exécution de l'application par le processeur configurant le dispositif informatique pour effectuer des actes comprenant :
la réception (901), via une interface utilisateur, d'une sélection d'un type de menace pour un vecteur d'attaque afin de vérifier les capacités défensives d'un système cible ;
la réception (903), via l'interface utilisateur, d'une sélection d'un ou plusieurs paramètres sélectionnables pour la délivrance du type de menace au système cible ;
en réponse à la sélection du type de menace et des paramètres sélectionnés :
l'accès (905) à un exécutable binaire de base et à une bibliothèque comprenant des fonctions pour générer des vecteurs d'attaque ;
l'ajout (907), à l'exécutable binaire de base, d'une ou de plusieurs fonctions de la bibliothèque sur la base du type de menace sélectionné et des paramètres sélectionnés ; et
la génération (909) d'une charge utile qui implémente le type de menace sélectionné et les paramètres sélectionnés dans un format de délivrance basé sur les paramètres sélectionnés ;
**caractérisé en ce que** : la charge utile générée est un seul exécutable autonome ; et
la génération de charges utiles fuzzées qui sont des variantes de la charge utile générée, les charges utiles fuzzées étant générées par une ou plusieurs variations aléatoires des paramètres sélectionnables, par variation déterministe des paramètres sélectionnables, ou sur la base d'un apprentissage automatique.

5. Dispositif informatique selon la revendication 4,
dans lequel l'interface utilisateur est une interface utilisateur graphique comprenant une zone interactive configurée pour permettre la sélection des paramètres sélectionnables.

6. Dispositif informatique selon la revendication 4,
dans lequel les paramètres sélectionnables comprennent des balises ou des étiquettes qui identifient une ou plusieurs propriétés pour générer des échantillons ou des simulations d'attaque.

7. Dispositif informatique selon la revendication 4,
dans lequel le format de délivrance comprend un ou plusieurs éléments parmi une macro, un fichier zip ou un courrier électronique.

8. Dispositif informatique selon la revendication 4,
dans lequel les paramètres sélectionnables comprennent des modèles définissant des scénarios d'attaque prédéterminés.

9. Support lisible par ordinateur sur lequel est stockée une pluralité de séquences d'instructions qui, lorsqu'elles sont exécutées par un processeur, amènent le processeur à exécuter un procédé comprenant :
la réception (901), via une interface utilisateur, d'une sélection d'un type de menace pour un vecteur d'attaque afin de vérifier les capacités défensives d'un système cible ;
la réception (903), via l'interface utilisateur, d'une sélection d'un ou plusieurs paramètres sélectionnables pour la délivrance du type de menace au système cible ;
en réponse à la sélection du type de menace et des paramètres sélectionnés :
l'accès (905) à un exécutable binaire de base et à une bibliothèque comprenant des fonctions pour générer des vecteurs d'attaque ;
l'ajout (907), à l'exécutable binaire de base, d'une ou de plusieurs fonctions de la bibliothèque sur la base du type de menace sélectionné et des paramètres sélectionnés ; et
la génération (909) d'une charge utile qui implémente le type de menace sélectionné et les paramètres sélectionnés dans un format de délivrance basé sur les paramètres sélectionnés ;
**caractérisé en ce que** : la charge utile générée est un seul exécutable autonome ; et
la génération de charges utiles fuzzées qui sont des variantes de la charge utile générée, les charges utiles fuzzées étant générées par une ou plusieurs variations aléatoires des paramètres sélectionnables, par variation déterministe des paramètres sélectionnables, ou sur la base d'un apprentissage automatique.
